(19) Europäisches Patentamt
European Patent Office
Office européen des brevets

(11) **EP 2 173 133 A1**

(12) **EUROPEAN PATENT APPLICATION**

(43) Date of publication:
**07.04.2010 Bulletin 2010/14**

(51) Int Cl.:
**H04W 74/08** (2009.01)

(21) Application number: **08165804.9**

(22) Date of filing: **03.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Corporation**
**02150 Espoo (FI)**

(72) Inventors:
• **Pirskanen, Juho Mikko**
**33580, Tampere (FI)**

• **Valio, Harri Johannes**
**34240, Kämmenniemi (FI)**

(74) Representative: **Ruuskanen, Juha-Pekka**
**Page White & Farrer**
**Bedford House**
**John Street**
**London**
**WC1N 2BF (GB)**

(54) **Access control for a Random Access Channel**

(57) A method and apparatus for controlling access to a communications channel is disclosed. At least one parameter associated with the communications channel is provided for the apparatus. A numerical value is selected, where after a delay parameter can be determined based on the at least one parameter and the numerical value. Timing of the start of transmission through the communications channel is then controlled according to the delay parameter.

| |
|---|
| Receive at least one parameter from an access system — 100 |
| Determine the probability of each persistency check round of being successful based on the received at least one parameter — 102 |
| Calculate ranges presenting random delays based on the probabilities — 104 |
| Select a random numerical value — 106 |
| Map the random value to a range — 108 |
| Derive a delay parameter based on the range — 110 |
| Delay transmission on a communications channel according to the delay parameter — 112 |
| After expiry of the delay, transmit on the communications channel — 114 |

Fig. 3

EP 2 173 133 A1

## Description

This disclosure relates to access procedures and in particular to controlling the timing of access to a communication channel. In certain more particular embodiments timing of access can be adjusted, for example, before start of transmission on a random access channel.

A user can access various applications by means of an appropriate communication device. A communication device may communicate with other communication devices, such as user terminals and/or network devices such as servers via a communication system. The communication may comprise, for example, communication of data for carrying communications such as voice, electronic mail (email), text message, multimedia and so on. A communication device of a user is often referred to as user equipment (UE).

A communication system in turn is a facility which facilitates communication between two or more entities such as user communication devices, network entities and other nodes. Depending on the context, a user equipment may also be considered as being a part of a communication system. In certain applications, for example in adhoc networks, the communication system can be based on use of a plurality of user equipment capable of communicating with each other. A communication system may be provided by one or more interconnect networks and the elements thereof. One or more gateway nodes may be provided for interconnecting various networks. A communication system typically operates in accordance with a standard and/or a set of specifications and protocols which set out what the various elements of the system are permitted to do and how that should be achieved. Also, the manner communication devices can access a communication system is typically defined, as is the manner in which communications should be implemented between the communication device and various elements of the communication system.

An appropriate access system allows the communication device to communicate via the communication system. An access to the communications system may be provided by means of a fixed line or wireless communication interface, or a combination of these. Examples of wireless systems include cellular or mobile networks, various wireless local area networks (WLANs), wireless personal area networks (WPANs), satellite based communication systems and various combinations of these. The access may be provided based on various access techniques, such as code division multiple access (CDMA), or wideband CDMA (WCDMA), the latter technique being used by communication systems based on the third Generation Partnership Project (3GPP) specifications. Other examples include time division multiple access (TDMA), frequency division multiple access (FDMA), space division multiple access (SDMA) and so on.

In a wireless system a network entity such as a base station provides an access node for communication devices. It is noted that in certain systems, for example those based on the 3G WCDMA, a base station is called 'Node B'. Typically the operation of a base station node and other apparatus of an access system is controlled by an appropriate control entity. The control entity can be interconnected with other control entities of the communication network.

A multiple of communication devices may attempt to access a communication system simultaneously. For example, a plurality of communication devices may perform an operation that is known as random access simultaneously. Such a situation may occur, for example, if a number of communication devices for example in a bus, underground or other train come out of a tunnel such that they are suddenly in the area of a cell that belongs to different location area than was the location area where the communication devices were previously attached to. Such a situation would force all of the communication devices to perform substantially at the same time a procedure know as location area update (LAU).

In slotted systems each communication device can use a slot of a transmission frame or similar structure for its transmission. Use of the same slot by a number of communication devices should normally be avoided. Thus a solution is needed for situations where a number of communication devices attempts to use the same common or shared channel substantially at the same time.

In accordance with a proposal the communication devices are controlled such that they use different delays in their access. For example, by use of different delays by different communication devices it is possible to reduce the likelihood of two or more communication devices transmitting to the same slot of a random access channel when the devices are performing a random access procedure at the same time.

A communication device may perform one or more checks to ensure that it has the right to access a communications channel. For example, a user terminal that is attempting to access a communication system may perform one or more persistency checks. A persistency check is a procedure that can be used when accessing commonly used channels to check if a communication device is allowed to access a particular channel at the time of the check. Thus the persistency check can be used to control the access by multiple devices. The checks may be performed by communication devices, for example user terminals such as mobile phones, attempting to access a communication system. The checks may be performed, for example, before initiation of transmission random access channel preambles or other messages in a random access procedure.

The herein described embodiments aim to provide a way of controlling access to common channels.

According to an embodiment, there is provided a method for controlling access to a communications channel, comprising providing at least one parameter associated with the communications channel, selecting a numerical value, determining a delay parameter based on the at least one parameter and the numerical value, and timing the start of transmission through the communications channel according to the delay parameter.

In accordance with another embodiment there is provided an apparatus for controlling access to a communications channel, comprising processor means for processing at least one parameter associated with the communications channel, for selecting a numerical value, for determining a delay parameter based on the at least one parameter and the numerical value, and for controlling the timing of transmission through the communications channel according to the delay parameter.

In accordance with a more detailed embodiment the delay parameter is determined based on at least one parameter received from a broadcast by an access system. Alternatively, or in addition to, the at least one parameter may comprises at least one parameter that is predetermined and fetched from a memory. The memory may be provided in a communication device attempting the access.

A looped comparison algorithm may be used for comparing a selected numerical value and a value that is computed based on the at least one parameter until a predefined criterion is satisfied. The delay parameter cam be determined based on the number of loops performed.

In an embodiment it can be determined, based on the at least one parameter and the selected numerical value, that nth check for access rights would be successful. The delay parameter can be determined based on said n. Computations of n can be based on the value of at least one logarithm.

In accordance with an embodiment at least one probability factor is determined, the probability factor defining the probability of right to access the communications channel in a given time. The probability factor can be used to calculate value ranges. A range can be selected based on mapping of the selected numerical value to the ranges, and the delay parameter can be derived based on the selected range.

In accordance with an embodiment a weighted random delay for accessing a communications channel is provided. The weighted delay may be provided based on access priority information associated with a communication device.

In certain embodiments the timing of the start of transmission on a random access channel is controlled based on the delay parameter.

An embodiment provides a computer program comprising program code product adapted to perform the method. The computer program code product can be provided on a machine readable medium.

For a better understanding of the present invention and how the same may be carried into effect, reference will now be made by way of example only to the accompanying drawings in which:

Figure 1 shows a schematic presentation of a communication system wherein the invention may be embodied;
Figure 2 shows a sectioned view of communication device;
Figures 3 to 5 show flowcharts in accordance with certain embodiments; and
Figure 6 shows a schematic presentation of a slotted transmission structure.

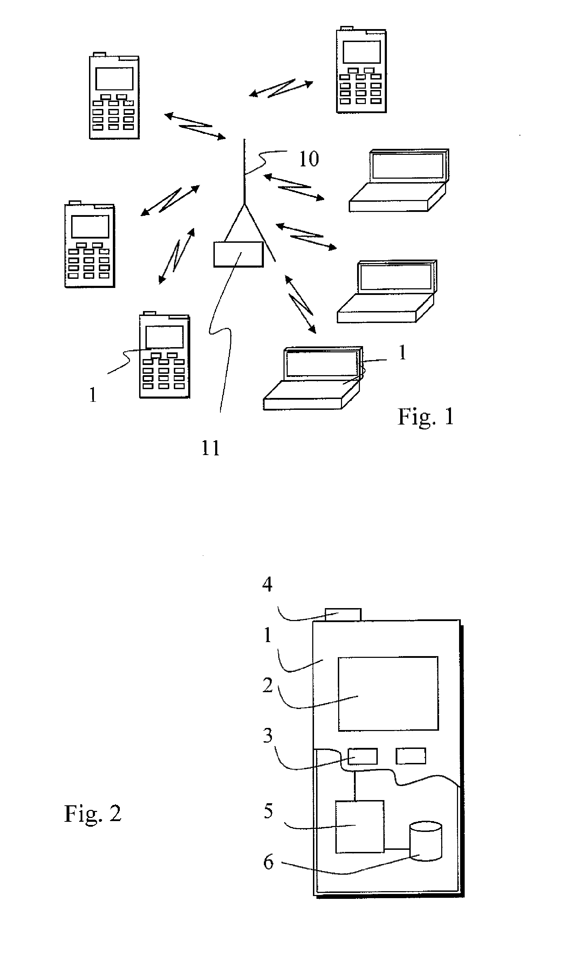

Before explaining in detail a few exemplifying embodiments, a brief explanation of wireless access is given with reference to Figure 1 showing a communication system providing wireless communications to a plurality of communication devices 1. A communication device 1, for example a mobile user device or equipment, can be used for accessing various services and/or applications provided via the wireless communication system. A communication device can typically access wirelessly a communication system via at least one wireless transmitter and/or receiver node 10 of an access system. Non-limiting examples of access nodes are a base station of a cellular system, for example a 3G WCDMA Node B, a base station of a wireless local area network (WLAN) and a satellite station of a satellite based communication system. The communication devices 1 may also communicate directly with each other.

The communications may be arranged in various manners based on an appropriate radio access technology or technologies. The access is provided via radio channels also known as access channels. Each communication device 1 may have one or more radio channels open at the same time. Each communication device may be connected to more than one base station 10 or similar entity. Also, a plurality of communicate devices may communicate with a base station or similar, and/or attempt to access the communication system via the same base station. A plurality of communication devices may also share a channel. For example, to start communications or to connect to a new access system, a plurality of communications devices may attempt to make the initial contact via a single channel, for example via a random access channel (RACH). The attempts to access may be made substantially at the same time.

The base station 10 of the access system can be connected to other parts of the communication system via appropriate connections, for one or more appropriate gateway nodes. These are not shown for clarity. A base station is typically controlled by at least one appropriate controller apparatus, generally denoted by 11 in Figure 1. The controller apparatus 11 can be provided for managing of the operation of the base station and/or communications via the base station. The controller apparatus is typically provided with memory capacity and at least one data processor. Various functional entities may be provided in the controller by means of the data processing capability thereof. The functional entities provided in the base station controller may provide functions relating to radio resource control, access control, packet data context control, relay control and so forth.

A communication device 1 can be used for various tasks such as making and receiving phone calls, for receiving and sending data from and to a data network and for experiencing, for example, multimedia or other content. For example, a communication device may access applications provided via a telephone network and/or a data network, such as applications that are provided based on the Internet Protocol (IP) or any other appropriate protocol. An appropriate mobile communication device may be provided by any device capable of at least sending and/or receiving wireless signals from the access system. Non-limiting examples include a mobile station (MS) such as a mobile phone or a smart phone, a portable computer provided with a wireless interface card or other wireless interface facility, personal data assistant (PDA) provided with wireless communication capabilities, or any combinations of these or the like.

As shown in Figure 2, a communication device 1 is typically provided with appropriate data processing apparatus, such as at least one data processor 5. At least one memory device 6 is also typically provided. The data processing and storage entities can be provided on an appropriate circuit board and/or in chipsets. Different functions and operations may be provided by different chips. Alternatively, at least partially integrated chips may be used. Antenna means 4, a display 2, and/or a keypad 3 may also be provided.

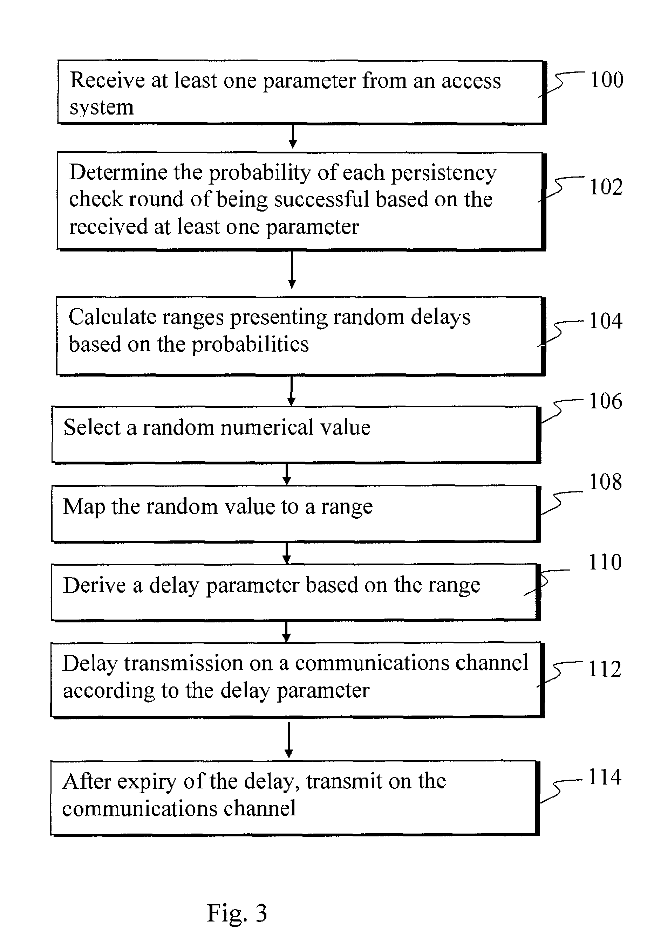

The following describes certain exemplifying embodiments with reference to Figures 3 to 6. In the herein described embodiments the timing of starting sending through a communications channel is controlled by means of a delay. The delay is determined according to a delay parameter that calculated based on parameters associated with the access channel. The one or more parameters may be received from the access system, for example be broadcast by the base station 10.

To determine if a delay is needed, a check if a communication device has the necessary rights to access a channel at a given time may need to be performed. Such situation may occur e.g. when a plurality communication devices tries to access a communication system via one or more commonly used or shared channels. Such a check can be used, for example, before initiation of transmission of a radio access channel preamble in a random access procedure at step 114 of Figure 3. In accordance with a more particular example a weighted random delay is provided for use to start a random access channel (RACH) preamble transmission.

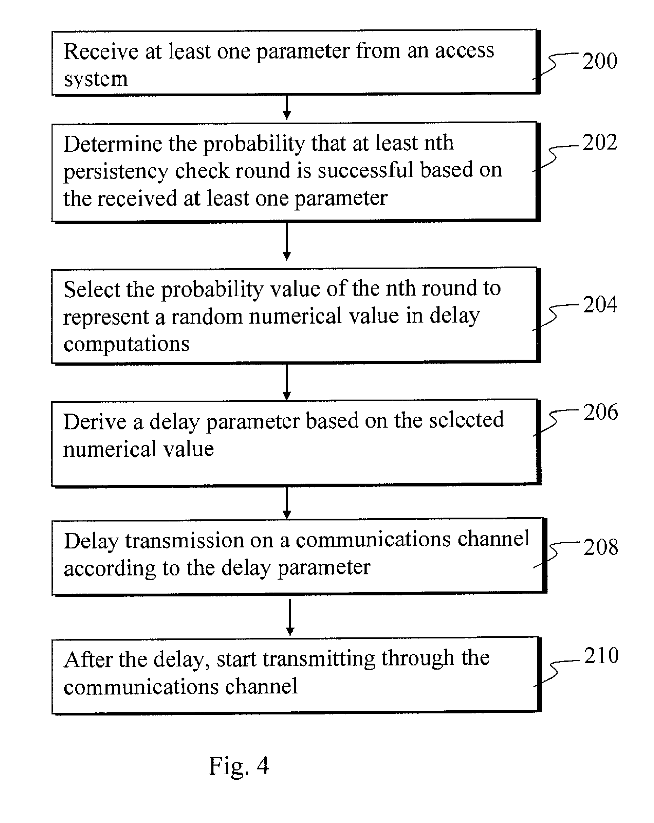

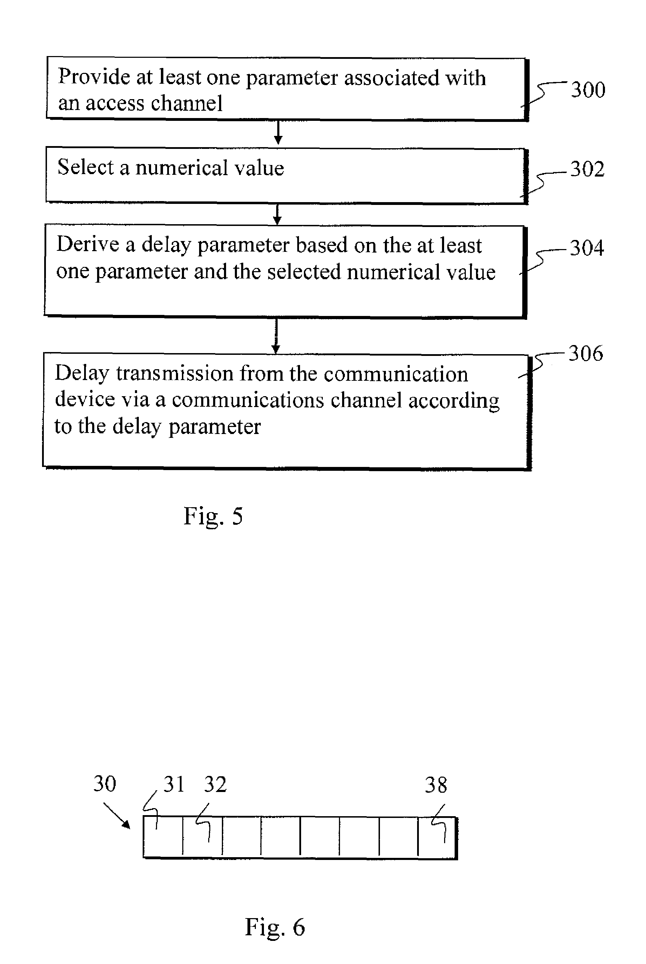

The delay can be derived by calculating or otherwise deriving a delay parameter directly from received one or more broadcast parameters. The broadcast parameters can be received at step 100 of Figure 3, step 200 of Figure 4 or step 300 of Figure 5 from a broadcast by the base station 10 of the access system. The calculated delay can then be used by a communication device 1 to delay the start of the transmission of a random access channel (RACH) message, for example a RACH preamble.

Before explaining certain embodiments in greater detail, use of the following basic calculation rules are assumed to apply:

1) Random numbers R drawn by a communication device for each check round are independent from each other: and

2) The value of a random number R is between or equal to 0 and 1 and the drawn values thereof have uniform distribution in the range of 0 to 1.

The random number may be pseudo random, but it is assumed that any error in distribution of the random number is minor, and thus the above assumptions are still considered valid even in that case.

In accordance with a possibility the probability of having rights for accessing to an access channel is calculated in a given time. In accordance with an embodiment shown in Figure 3, a probability factor, or a persistence value, Pi, may be determined at 102 for each persistency check round. The calculation can be based on information regarding the access service class (ASC) of the communication device and one or more parameters received from the access system. The received parameters may be, for example, based on the system parameters of the third generation (3G) system, as defined in third generation partnership project technical specification 3GPP TS 25.331, V3.21.0 (2004-12), subclause 8.5.12, page 225. For example, in the 3G based systems the communication device can determine the access service class for a particular random access procedure whilst the access system may broadcast different parameter(s) for each access service class. This enables the access system to assign different priorities to different access service classes

The access service classes can thus be used to divide access channel resources into different classes in order to provide different priorities of the usage of a random access channel. The numeration of the classes is typically such that it corresponds to the order of priority (ASC 0 = highest priority, ASC 7 = lowest priority). ASC 0 is to be used in case of emergency calls or for reasons with equivalent high priority. An access service class can be defined by an access service class identifier, i, that defines a certain partition of the access channel resources and an associated persistence value $P_i$.

The persistence value $P_i$ is a probability factor, and thus can have any value between 0 and 1. The persistence values $P_i$ to be associated with each access service channel can be derived from a dynamic persistence level parameter N = 1, ..., 8. The N parameter can be broadcast by the access system, for example, in system information block (SIB) 7. N may be, for example, any integer value between 1 and 8. Another possible parameter is the persistence scaling factor s. Such a parameter can be broadcast, for example, in system information block (SIB) 5. The value of the scaling factor s may be any value between 0.9...0.2. The step size between the value of the scaling factor may be, for example, 0.1.

It shall be understood that these parameters are only examples, and that calculations of a delay may include use of other parameters. Also, a delay parameter may be signalled from another device, for example from the access system, and the signalling scheme may be different from the one herein described.

The determination of the probability factor, such as the $P_i$ parameter, can thus be made dependent on the access service class (ASC) of the communication device. The determination of the $P_i$ parameter based on the access service class can be classified into three different categories as follows:

> for access service class 0, $P_i = 1$;
> for access service class 1, $P_i = P(N)$; and
> for access service class n=2-7, $P_i = sn * P(N)$, where
>
> > $P(N)$ is obtained from formula $P(N) = 2^{-(N-1)}$, and
> > sn is a persistence scaling factor.

In arrangements where a persistence check is used, the check can be performed as a recursive loop of drawing a random number and comparing that to a probability threshold until an acceptance criterion is satisfied so that a random length of delay is generated before anything is transmitted. In a method based on such a comparison the persistence check is provided such that a communication device draws a random number R ($0 \le R < 1$) and compares that to an associated persistence value $P_i$. The random number R has uniform distribution and the value of $P_i$ can be fixed, calculated or otherwise derived from system information parameters broadcasted by a radio access network (RAN). If the random number R is greater than the persistence value $P_i$, the communication device considers that persistence check has failed and access to the random channel is not permitted. The communication device can then wait for a predefined time. The waiting time can be fixed, calculated or otherwise derived from broadcasted system information parameters. Upon expiry of the timer the communication device can start the testing procedure again by drawing a new random number R and by performing a new comparison. If this next round or whenever the nth round produces a random number R that is smaller than or equal to the persistency value $P_i$, the communication device can continue the random access procedure by starting to send to a radio access channel (RACH).

Consider that a probability parameter $P_{true1}$ is indicative of the probability of the first persistence check round resulting $R \le P_i$. That is, the probability parameter is indicative that the first check round would result access if the above discussed test based on the comparison procedure was followed. In such case it can be assumed that the probability

$$P_{true1} = P_i .$$

The value of $P_i$ can be used as such as the probability since it is within the range of 0 to 1.

The probability of the second persistence check being successful, $P_{true2}$, can be determined as

$$P_{true2} = (1 - P_i) P_i.$$

This can be assumed to be so because the first persistence check needs to be 'not true' and the second 'true'.

The probability of the third persistence check being successful, $P_{true3}$, can be determined as

$$P_{true3} = (1 - P_i)(1 - P_i) P_i = (1 - P_i)^{2} * P_i.$$

The above determinations of the probability of a round being successful can be generalised so that the probability for the nth persistence check being successful is

$$P_{true,n} = (1 - P_i)^{n-1} * P_i$$

Based on this formula a communication device can calculate the probability of a particular persistence check round being successful ($P_{true,n}$) for each persistence check round at 102 by simply calculating the value $P_i$ from the received at least one parameter and using different indexes for each check round.

In accordance with an embodiment computations for the first 10 check rounds are considered as being enough. For example, in applications where each check round equals 10ms a result that only the tenth check round would be successful would also mean a 90ms delay in the start of sending on the access channel. In certain applications such a delay can be considered to be the longest possible delay that is needed for appropriately spreading the access of a plurality of communication devices in time. In accordance with a possible embodiment the check is always considered as being successful after a certain number of check rounds. For example, 10 times of the defined delay can be considered to be more than enough, so the tenth round would always be true, at least. Of course, other limits can be used, depending on the circumstances. For example, probabilities of a fixed number of at least 15 or 20 checks can be considered, the last check being always considered as true.

Based on the calculation of the probability for success in each check round the communication device can then determine different ranges at 104. Each of the ranges can present a random delay. In accordance with a possibility the first range presents zero delay. For example, the ranges can be as follows:

Range r0: $0 \le r0 \le P_{true1}$;
Range r1: $r0 < r1 \le (P_{true1} + P_{true2})$;
Range r2: $r1 < r2 \le (P_{true1} + P_{true2} + P_{true3})$;
Range r8: $r7 < r8 \le (P_{true1} + P_{true2} + P_{true3} \cdots + P_{true9})$; and
Range r9: $r8 < r9 \le 1$.

A delay that is to be used to delay the access can then be derived as follows. The communication device can draw a single random numerical value R at 106 and check at 108 to which of the ranges ro to r9 the random value falls into. The function may be provided such that the indices of the ranges (if indexing is starting from 0) give directly the number of predefined delays that the communication device should wait before starting the transmission. That is, the index number would give directly a delay parameter at 110 of Figure 3.

The above example employs 10 ranges from r0 to r9 where each of the ranges correspond a predefined delay. In accordance with a possibility range r0 would indicate a zero delay, range r1 a 10 ms delay, range r2 a 20ms delays and so forth. Thus mapping of the random number R into the r0 range would mean zero delay, and thus immediate access to the random access channel. Any greater range would result a delay at 112 before transmission at 114.

Another embodiment is illustrated by Figure 4. In this embodiment the probability that at least nth round is successful is determined at 202. The determination can be based on formula:

$$P_{true,nth} = 1-(1-P_i)^n.$$

As above, calculation of the probability factor $P_i$ may be provided based on one or more parameters received from the access system.

The $P_{true,nth}$ can be selected at 204 as a representing a random numerical value R drawn by the communication device,

$$R = 1- (1-P_i)^n$$

In the above formula variable n is unknown. By solving the variable n out from the formula and placing the real values including the drawn random number to the formula it is possible to determine how many rounds needs to be waited (in a recursive loop) before the result would be a successful check. The communication device can thus use R to calculate a delay parameter n at 206 as follows:

$$P_{true,nth} = R$$

$$R = 1-(1-P_i)^n$$

$$(1-P_i)^n = 1-R$$

$$n * \log(1-P_i) = \log(1-R)$$

$$n = \frac{\log(1-R)}{\log(1-P_i)}$$

By truncating the delay parameter n of this example at 206 down to the nearest integer, the result gives an integer that presents the number of times that a delay period, for example a 10ms delay, needs to be waited at 208 before the communication device can initiate transmission at 210 on an access channel. Thus the delay can be given by (if 10ms delay intervals are used):

$$T_{RACH\_delay} = 10ms * \lfloor n \rfloor$$

Calculations of logarithms by computing devises can be provided differently from the example given above. In accordance with an embodiment, exact values of the logarithms are not calculated. Instead, approximate values from iterative estimation algorithms can be used to obtain the values. Appropriate iterative estimation algorithms for estimating logarithm values are known and appropriate software modules are available. According to a possibility a logarithm table or similar can be used to estimate the values.

In accordance with a further embodiment, to simplify the implementation, the calculation or estimation of the logarithm values is not performed. For example, the delay parameter can be calculated by a software running in an appropriate computing device by means of a for loop. If a for loop is used to provide the Figure 4 embodiment type direct computation of the delay parameter, the process of determining the delay can be seen as to certain extend resembling use of ranges rather than exact values. In pseudocode this can be expressed as follows:

```
* R = numerical value
* n = 1
* loop until R < (1 - (1-P_i)^n) n = n + 1
* loop end
* transmit delay parameter = n - 1
```

Thus the delay D in the start of transmission through the communications channels can be expressed as

$D = (n-1)t$, where t is a predefined length of time.

An example for the general principles of operation is illustrated by the flowchart of Figure 5 showing a general example how to control access to a communications channel. In the method at least one parameter is provided for use in computations by a processor apparatus of a communications device at 300. One or more parameters may be received via the same access channel the communication device is attempting to access. In certain applications at least one of the parameters can be a predetermined fixed value that is provided for being used in the computations. The predetermined fixed value can be stored in a memory of a communication device.

The processor apparatus of the communication device can also be configured to select a numerical value representing a random at 302. A delay parameter can then be computed directly at 304 based on the received at least one parameter and the selected numerical value. Start of transmission on the communications channel can then be delayed in time at 306 according to the delay parameter.

The control functionality is provided to avoid simultaneous use of the same resources by too many communication devices. For example, the method can be used to prevent multiple communication devices from attempting to use the first slot 31 of a data frame 30 of Figure 6. Instead, the attempts can be divided more evenly on time over the time slots 31 to 38 of frame 30. Each slot of frame 30 can have a predefined length, for example 10ms. In this example the start of the transmission can thus be distributed over a period of 80ms, assuming use of 10ms slots. It shall be appreciated that Figure 6 only illustrates the principle of a slotted transmission structure, frame 30 being only a schematic presentation that is intended to assist in understanding the embodiments and that different data carrying structures may be used as well.

The required data processing apparatus and functions of the communication device may be provided by means of one or more data processors. The data processor may be provided by means of, for example, at least one chip. Appropriate data processing may be provided in a processing unit provided in association with a communication device, for example a mobile station. The data processing may be distributed across several data processing modules. The above described functions may be provided by separate processors or by an integrated processor. An appropriately adapted computer program code product or products may be used for implementing the embodiments, when loaded on an appropriate data processing apparatus, for example in a processor apparatus 5 associated with the communication device 1 shown in Figure 2. The program code product for providing the operation may be stored on and provided by means of an appropriate carrier medium. An appropriate computer program can be embodied on a computer readable record medium. A possibility is to download the program code product to a communication device via a data network.

In the herein described embodiments a communication device may need to draw a random number R only once where after it can calculate or otherwise derive a delay parameter indicative of the delay that is to be waited before starting transmission on an access channel. The delay can be determined based on a calculated value without comparisons of a number with probabilities of successive check loops. This may provide a simple implementation that may provide savings in use of processing capacity and power.

It is noted that whilst embodiments have been described in relation to random access channel preambles, similar principles can be applied to accessing other type of channels.

It is also noted that although certain embodiments were described above by way of example with reference to certain exemplifying architectures for wireless networks, technologies and standards, embodiments may be applied to any other suitable forms of communication systems than those illustrated and described herein.

It is also noted herein that while the above describes exemplifying embodiments of the invention, there are several variations and modifications which may be made to the disclosed solution without departing from the scope of the present invention.

## Claims

1. A method for controlling access to a communications channel, comprising:

    providing at least one parameter associated with the communications channel;
    selecting a numerical value;
    determining a delay parameter based on the at least one parameter and the numerical value; and
    timing the start of transmission through the communications channel according to the delay parameter.

**2.** A method as claimed in claim 1, wherein the providing comprises at least one of receiving at least one parameter from a broadcast by an access system and using at least one parameter that has a pretermined value.

**3.** A method as claimed in claim 1 or 2, wherein the delay parameter provides a weighted random delay of accessing the communications channel based on access priority information associated with a communication device.

**4.** A method as claimed in any preceding claim, comprising

determining at least one probability factor defining the probability of right to access the communications channel in a given time based on the at least one parameter;

deriving the delay parameter based on the determined at least one probability factor and the selected numerical value; and

timing the start of transmission through the communications channel according to the delay parameter.

**5.** A method as claimed in claim 4, wherein the determining of the at least one probability factor comprises calculating a probability factor for each of a predefined plurality of time periods.

**6.** A method as claimed in claim 5, comprising

calculating value ranges based on the probability factors;

selecting a range based on mapping of the selected numerical value to the ranges; and

deriving the delay parameter based on the selected range.

**7.** A method as claimed in any of claims 1 to 3, comprising

determining, based on the at least one parameter and the selected numerical value, that nth check for access rights would be successful; and

determining the delay parameter based on said n.

**8.** A method as claimed in claim 7, comprising computing n based on

$$n = \frac{\log(1 - R)}{\log(1 - P_i)}$$

where R represents the selected numerical value and $P_i$ represents a probability factor calculated based on the at least one received parameter.

**9.** A method as claimed in claim 7, wherein determining n comprises estimating the value of at least one logarithm.

**10.** A method as claimed in any of claims 1 to 3, comprising:

using a looped comparison algorithm for comparing the selected numerical value and a value that is computed based on the at least one parameter until a predefined criterion is satisfied; and

determining the delay parameter based on the number of loops performed.

**11.** A method as claimed in claim 10, comprising determining the delay in the start of the transmission by multiplying a predetermined length of time by an integer that is one less than said number of loops.

**12.** A computer program comprising program code means adapted to perform the steps of any of claims 1 to 11 when the program is run on a data processing apparatus.

**13.** An apparatus for controlling access to a communications channel, comprising processor means for processing at least one parameter associated with the communications channel, for selecting a numerical value, for determining a delay parameter based on the at least one parameter and the numerical value, and for controlling the timing of transmission through the communications channel according to the delay parameter.

**14.** An apparatus as claimed in claim 13, wherein the processor means are configured to determine the delay parameter based on at least one parameter received from a broadcast by an access system and/or at least one predetermined parameter fetched from a memory.

**15.** An apparatus as claimed in claim 13 or 14, wherein the processor means are further configured to use a looped comparison algorithm for comparing the selected numerical value and a value that is computed based on the at least one parameter until a predefined criterion is satisfied, and to determine the delay parameter based on the number of loops performed.

**16.** An apparatus as claimed in claim 13 or 14, wherein the processor means are further configured to determine, based on the at least one parameter and the selected numerical value, that nth check for access rights would be successful, and to determine the delay parameter based on said n.

17. An apparatus as claimed in claim 16, wherein the processor means is configured to compute n based on the value of at least one logarithm.

18. An apparatus as claimed in any of claim 13 to 17, wherein the processor means is configured to determine at least one probability factor defining the probability of right to access the communications channel in a given time, to calculate value ranges based on the at least one probability factor, to select a range based on mapping of the selected numerical value to the ranges, and to derive the delay parameter based on the selected range.

19. An apparatus as claimed in any of claims 13 to 18, wherein the processor means are configured to provide a weighted random delay for accessing the communications channel based on access priority information associated with a communication device.

20. An apparatus as claimed in any of claims 13 to 19, wherein the processor means are configured to control the timing of the start of transmission on a random access channel based on the delay parameter.

Fig. 1

Fig. 2

Receive at least one parameter from an access system — 100

Determine the probability of each persistency check round of being successful based on the received at least one parameter — 102

Calculate ranges presenting random delays based on the probabilities — 104

Select a random numerical value — 106

Map the random value to a range — 108

Derive a delay parameter based on the range — 110

Delay transmission on a communications channel according to the delay parameter — 112

After expiry of the delay, transmit on the communications channel — 114

Fig. 3

Receive at least one parameter from an access system $\sim$ 200

Determine the probability that at least nth persistency check round is successful based on the received at least one parameter $\sim$ 202

Select the probability value of the nth round to represent a random numerical value in delay computations $\sim$ 204

Derive a delay parameter based on the selected numerical value $\sim$ 206

Delay transmission on a communications channel according to the delay parameter $\sim$ 208

After the delay, start transmitting through the communications channel $\sim$ 210

Fig. 4

Provide at least one parameter associated with an access channel  ⌒300

Select a numerical value  ⌒302

Derive a delay parameter based on the at least one parameter and the selected numerical value  ⌒304

⌒306
Delay transmission from the communication device via a communications channel according to the delay parameter

## Fig. 5

30    31  32                                    38

## Fig. 6

**Europäisches Patentamt**
**European Patent Office**
**Office européen des brevets**

## EUROPEAN SEARCH REPORT

Application Number

EP 08 16 5804

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 889 664 A (LUCENT TECHNOLOGIES INC [US]) 7 January 1999 (1999-01-07) | 1,2, 12-14 | INV. H04W74/08 |
| Y | * abstract * | 4-11, 15-18,20 | |
| | * column 1, line 5 - line 7 * * column 5, line 51 - column 6, line 56 * * figure 3 * | | |
| X | US 2004/032877 A1 (CHUAH MOOI CHOO [US] ET AL) 19 February 2004 (2004-02-19) | 1-3, 12-14,19 | |
| Y | * paragraph [0003] * | 4-11, 15-18,20 | |
| | * paragraph [0017] - paragraph [0022] * * paragraph [0024] * * figures 2,5 * | | |
| X | WO 2006/128046 A (MOTOROLA INC [US]; HARRIS JOHN M [US]; KELLEY SEAN S [US]; MARTINOVICH) 30 November 2006 (2006-11-30) * page 2, line 23 - line 28 * * page 3, line 24 - line 27 * * page 7, line 1 - line 18 * * page 10, line 3 - page 11, line 15 * * page 14, line 4 - page 18, line 20 * * page 19, line 14 - page 21, line 9 * * figures 5,6 * | 1-3, 12-14,19 | |
| X | WO 2007/035058 A (LG ELECTRONICS INC [KR]; SUN LI-HSIANG [US]; YOON YOUNG CHEUL [US]; LE) 29 March 2007 (2007-03-29) * page 1, line 5 - line 6 * * page 12, line 7 - line 26 * * page 17, line 9 - line 13 * * page 20, line 4 - line 14 * * page 28, line 21 - page 30, line 10 * * page 33, line 5 - line 11 * * figures 17,18 * | 1,12,13 | |

TECHNICAL FIELDS SEARCHED (IPC)

H04W

-/--

The present search report has been drawn up for all claims

| Place of search | Date of completion of the search | Examiner |
|---|---|---|
| Munich | 24 March 2009 | Rosenauer, Hubert |

EPO FORM 1503 03.82 (P04C01)

**EUROPEAN SEARCH REPORT**

Application Number

EP 08 16 5804

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/064272 A (SAMSUNG ELECTRONICS CO LTD [KR]; KIM SOENG-HUN [KR]; LEE KOOK-HEUI [KR) 29 July 2004 (2004-07-29) <br> * abstract * <br> * page 1, line 6 - line 10 * <br> * page 5, line 25 - page 6, line 34 * <br> * page 13, line 2 - line 19 * <br> * page 14, line 24 - line 29 * <br> * page 16, line 9 - line 26 * <br> * page 18, line 19 - page 19, line 2 * <br> * figures 5,6 * <br> ----- | 1-20 | |

TECHNICAL FIELDS
SEARCHED      (IPC)

The present search report has been drawn up for all claims

| Place of search | Date of completion of the search | Examiner |
|---|---|---|
| Munich | 24 March 2009 | Rosenauer, Hubert |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 08 16 5804

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2009

| Patent document cited in search report | | Publication date | Patent family member(s) | | Publication date |
|---|---|---|---|---|---|
| EP 0889664 | A | 07-01-1999 | BR | 9801790 A | 15-06-1999 |
| | | | CA | 2237828 A1 | 09-12-1998 |
| | | | CN | 1215963 A | 05-05-1999 |
| | | | DE | 69803635 D1 | 14-03-2002 |
| | | | DE | 69803635 T2 | 14-08-2002 |
| | | | JP | 11055179 A | 26-02-1999 |
| | | | TW | 385601 B | 21-03-2000 |
| | | | US | 6690661 B1 | 10-02-2004 |
| | | | US | 6075779 A | 13-06-2000 |
| US 2004032877 | A1 | 19-02-2004 | NONE | | |
| WO 2006128046 | A | 30-11-2006 | EP | 1889408 A2 | 20-02-2008 |
| | | | JP | 2008541515 T | 20-11-2008 |
| | | | KR | 20080012892 A | 12-02-2008 |
| | | | US | 2006268768 A1 | 30-11-2006 |
| WO 2007035058 | A | 29-03-2007 | CA | 2620550 A1 | 29-03-2007 |
| | | | CN | 101268713 A | 17-09-2008 |
| | | | EP | 1927259 A2 | 04-06-2008 |
| | | | KR | 20080063348 A | 03-07-2008 |
| WO 2004064272 | A | 29-07-2004 | CN | 1723638 A | 18-01-2006 |
| | | | EP | 1582016 A1 | 05-10-2005 |
| | | | JP | 2006515737 T | 01-06-2006 |
| | | | KR | 20040064867 A | 21-07-2004 |
| | | | RU | 2304348 C2 | 10-08-2007 |
| | | | US | 2004146019 A1 | 29-07-2004 |

EPO FORM P0459

For more details about this annex : see Official Journal of the European Patent Office, No. 12/82